(19)

**Europäisches Patentamt**
**European Patent Office**
**Office européen des brevets**

(11) **EP 4 659 837 A1**

(12) **EUROPEAN PATENT APPLICATION**

(43) Date of publication:
**10.12.2025 Bulletin 2025/50**

(21) Application number: **25205029.9**

(22) Date of filing: **12.05.2020**

(51) International Patent Classification (IPC):
**B01D 53/02** (2006.01)    **B01D 53/04** (2006.01)
**B01J 20/20** (2006.01)    **B01J 20/26** (2006.01)
**B01J 20/28** (2006.01)

(52) Cooperative Patent Classification (CPC):
**B01D 53/0407; B01D 53/02; B01J 20/027;**
**B01J 20/103; B01J 20/165; B01J 20/20;**
**B01J 20/28026; B01J 20/28028; B01J 20/28035;**
**B01J 20/321; B01J 20/3236; B01J 20/3238;**
**B01J 20/324;** B01D 2253/102; B01D 2253/202;
(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.05.2019  US 201962848747 P**

(62) Document number(s) of the earlier application(s) in
accordance with Art. 76 EPC:
**20728656.8 / 3 969 154**

(71) Applicant: **W. L. Gore & Associates, Inc.**
**Newark, DE 19711 (US)**

(72) Inventors:
• **STARK, Stephen K.**
**Newark, 19711 (US)**

• **NIKOLAKIS, Vladimiros**
**Newark, 19711 (US)**
• **KENALEY, Ryan C.**
**Newark, 19711 (US)**

(74) Representative: **HGF**
**HGF Limited**
**4th Floor, 1 City Square**
**Leeds LS1 2AL (GB)**

Remarks:
This application was filed on 26.09.2025 as a
divisional application to the application mentioned
under INID code 62.

(54) **PERFORATED SORBENT POLYMER COMPOSITE SHEETS FOR ENHANCED MASS TRANSPORT**

(57)    Devices and methods utilizing sorbent polymer composite materials in the form of at least one sheet. The at least one sheet can have a plurality of perforations that aids in the formation of an internal liquid network. In some embodiments, each perforation of the plurality of perforations has a size ranging from 0.1 mm to 6.5 mm and the at least one sheet has a perforation density ranging from 0.14% to 50% based on a total surface area of the at least one sheet.

FIG. 1

EP 4 659 837 A1

(52) Cooperative Patent Classification (CPC): (Cont.)
B01D 2257/302; B01D 2257/304; B01D 2257/602

**Description**

**FIELD**

The present disclosure relates to the field of pollution control systems and methods for removing compounds and fine particulate matters from gas streams.

BACKGROUND

Coal-fired power generation plants, municipal waste incinerators, and oil refinery plants generate large amounts of gases (such as but not limited to flue gases) that contain substantial varieties and quantities of environmental pollutants, such as sulfur oxides ($SO_2$, and $SO_3$), nitrogen oxides ($NO$, $NO_2$), mercury (Hg) vapor, and particulate matters (PM). In the United States, burning coal alone generates about 27 million tons of $SO_2$ and 45 tons of Hg each year. Thus, there is a need for improvements to control systems and methods for removing sulfur oxides, mercury vapor, and fine particulate matters from industrial gases, such as coal-fired power plant flue gas.

**SUMMARY**

This summary is a high-level overview of various aspects and introduces some of the concepts that are further described in the Detailed Description section below. The subject matter should be understood by reference to appropriate portions of the entire specification, any or all drawings, and each claim.

Some aspects of the present disclosure relate to a device comprising: a sorbent polymer composite material comprising: a sorbent material; and a polymer material, wherein the sorbent polymer composite material is in the form of at least one sheet; wherein the at least one sheet comprises: a first surface; wherein the first surface is configured such that, when a gas stream (such as but not limited to a flue gas stream) having at least one gaseous component is flowed over the first surface, the at least one gaseous component reacts within the sorbent polymer composite material to form at least one liquid product; a second surface opposite the first surface; and a plurality of perforations; wherein each perforation of the plurality of perforations has a size ranging from 0.1 mm to 6.5 mm; wherein the at least one sheet has a perforation density ranging from 0.14% to 50%; wherein each perforation of the plurality of perforations extends through the at least one sheet; wherein the at least one sheet is configured such that, when the at least one liquid product accumulates within the at least one sheet, the accumulation of the at least one liquid product causes the at least one liquid product to form an internal network that percolates at least through the plurality of perforations; wherein the formation of the internal network allows the at least one liquid product to access the second surface of the at least one sheet.

In some aspects, each perforation of the plurality of perforations has a size ranging from 0.5 mm to 4 mm.

In some aspects, the at least one sheet has a perforation density ranging from 2% to 20%.

In some aspects, the plurality of sheets forms a plurality of channels, wherein the device is configured such that the at least one liquid product is drainable through each channel of the plurality of channels.

In some aspects, the plurality of channels comprises a plurality of adjacent channels, wherein each adjacent channel of the plurality of adjacent channels is connected.

In some aspects, the device comprises a plurality of pleated sheets and a plurality of flat sheets in an alternating configuration.

In some aspects, the at least one gaseous component comprises at least one of: mercury vapor, at least one $SO_x$ compound, hydrogen sulfide, or combinations thereof.

In some aspects, the at least one liquid product comprises at least one of: sulfuric acid, liquid elemental sulfur or combinations thereof.

In some aspects, the polymer material comprises at least one of: polytetrafluoroethylene (PTFE); polyfluoroethylene propylene (PFEP); polyperfluoroacrylate (PPFA); polyvinylidene fluoride (PVDF); a terpolymer of tetrafluoroethylene, hexafluoropropylene-vinylidene-fluoride (THV), or polychlorotrifluoroethylene (PCFE), or combinations thereof.

In some aspects, the sorbent material comprises at least one of: activated carbon, silica gel, zeolite, or combinations thereof.

In some aspects, the sorbent polymer composite material further comprises a halogen source.

Some aspects of the present disclosure relate to a method comprising: obtaining a device comprising: a sorbent polymer composite material comprising: a sorbent material; and a polymer material, wherein the sorbent polymer composite material is in the form of at least one sheet; wherein the at least one sheet comprises: a first surface; a second surface opposite the first surface; and a plurality of perforations; wherein each perforation of the plurality of perforations has a size ranging from 0.1 mm to 6.5 mm; wherein the at least one sheet has a perforation density ranging from 0.14% to 50% based on a total surface area of the at least one sheet; wherein each perforation of the plurality of perforations extends through the at least one sheet; flowing a gas stream having at least one gaseous component over the first surface; reacting the at least one gaseous component within the sorbent polymer composite material to form at least one liquid product; accumulating the at least one liquid product within the at least one sheet; forming an internal network of the at least one liquid product within the at least one sheet; percolating the at least one liquid product at least through the plurality of perforations; and accessing, with the at least one liquid product, the second surface of the sheet

In some aspects, the device comprises a plurality of sheets, wherein the plurality of sheets forms a plurality of channels and the method comprises a step of draining the at least one liquid product through at least one channel of the plurality of channels.

In some aspects, the method comprises a step of collecting the at least one liquid product from the at least one channel of the plurality of channels.

## DRAWINGS

Some embodiments of the disclosure are herein described, by way of example only, with reference to the accompanying drawings. With specific reference now to the drawings in detail, the embodiments shown are by way of example and for purposes of illustrative discussion of embodiments of the disclosure. In this regard, the description taken with the drawings makes apparent to those skilled in the art how embodiments of the disclosure may be practiced.

Figure 1 is a front view of an exemplary sorbent polymer composite material in the form of at least one sheet in accordance with the present disclosure.
Figure 2 is a side view of an exemplary sorbent polymer composite material in the form of at least one sheet in accordance with the present disclosure.
Figure 3 is a non-limiting example of a microstructure of an exemplary sorbent polymer composite material of the present disclosure.

## DETAILED DESCRIPTION

Among those benefits and improvements that have been disclosed, other objects and advantages of this disclosure will become apparent from the following description taken in conjunction with the accompanying figures. Detailed embodiments of the present disclosure are disclosed herein; however, the disclosed embodiments are merely illustrative of the disclosure that may be embodied in various forms. In addition, each of the examples given regarding the various embodiments of the disclosure which are intended to be illustrative, and not restrictive.

Throughout the specification and claims, the following terms take the meanings explicitly associated herein, unless the context clearly dictates otherwise. The phrases "in one embodiment," "in an embodiment," and "in some embodiments" as used herein do not necessarily refer to the same embodiments. Furthermore, the phrases "in another embodiment" and "in some other embodiments" as used herein do not necessarily refer to a different embodiment. All embodiments of the disclosure are intended to be combinable without departing from the scope or spirit of the disclosure.

As used herein, the term "based on" is not exclusive and allows for being based on additional factors not described, unless the context clearly dictates otherwise. In addition, throughout the specification, the meaning of "a," "an," and "the" include plural references. The meaning of "in" includes "in" and "on."

All prior patents, publications, and test methods referenced herein are incorporated by reference in their entireties.

While several embodiments of the present disclosure have been described, these embodiments are illustrative only, and not restrictive, and that many modifications may become apparent to those of ordinary skill in the art. For example, all dimensions discussed herein are provided as examples only, and are intended to be illustrative and not restrictive.

Some embodiments of the present disclosure relate to a device that includes a sorbent polymer composite material. As used herein "sorbent polymer composite material" is defined as a sorbent material embedded within a matrix of a polymer material.

In some embodiments, the polymer material of the sorbent polymer composite material includes at least one of: polyfluoroethylene propylene (PFEP); polyperfluoroacrylate (PPFA); polyvinylidene fluoride (PVDF); a terpolymer of tetrafluoroethylene, hexafluoropropylene-vinylidene-fluoride (THV), or polychlorotrifluoroethylene (PCFE), or combinations thereof. In some embodiments, the polymer material includes polytetrafluoroethylene (PTFE). In some embodiments, the polymer material includes expanded polytetrafluoroethylene (ePTFE).

In some embodiments, the sorbent material of the sorbent polymer composite material includes at least one of: activated carbon, coal-derived carbon, lignite-derived carbon, wood-derived carbon, coconut-derived carbon, silica gel, zeolite, or any combination thereof.

In some embodiments, the sorbent polymer composite material further includes a halogen source. In some embodiments, the halogen source may be incorporated into the sorbent polymer composite material by any suitable technique which may include, but is not limited to, imbibing, impregnating, adsorbing, mixing, sprinkling, spraying, dipping, painting, coating, ion exchanging or otherwise applying the halogen source to the sorbent polymer composite material. In some embodiments, the halogen source may be located within the sorbent polymer composite material, such as within any porosity of the sorbent polymer composite material. In some embodiments, the halogen source may be provided in a solution which may, under system operation conditions, *in situ* contact the sorbent polymer composite material.

In some embodiments, the halogen source of the sorbent polymer composite is a halogen salt, an elemental halogen, or any combination thereof. In some embodiments, the halogen source is chosen from at least one of sodium chloride, potassium chloride, sodium bromide, potassium bromide, sodium iodide, potassium iodide, tetramethylammonium iodide, tetrabutylammonium iodide, tetraethylammonium iodide, tetrapropylammonium iodide, tetramethylammonium bromide, tetraethylammonium bromide, tetrapropylammonium bromide, tetrabutylammonium bromide, tetramethylammonium chloride, tetraethylammonium chloride, tetrapropylammonium chloride, tetrabutylammonium chloride, elemental iodine ($I_2$), elemental chlorine ($Cl_2$), elemental bromine ($Br_2$), or any combination thereof.

Additional configurations of the sorbent polymer composite described herein and additional examples of the halogen sources described herein are set out in US Patent No. 9,827,551 to Hardwick et al and US Patent No. 7,442,352 to Lu et al, each of which are incorporated by reference herein in their entireties.

Some embodiments of the present disclosure are referred to as a "flow by" system because a reactant (such as the at least one gaseous component) is flowed over (and by) a surface of a device that includes a sorbent polymer composite material. This is contrast to "flow through" systems, in which reactants are flowed through a catalytic material. In some embodiments, the sorbent polymer composite material is in the form of at least one sheet. In some embodiments, the at least one sheet includes a first surface and a second surface opposite the first surface. In some embodiments, the first surface is configured such that, when a gas stream (such as but not limited to a flue gas stream) having at least one gaseous component is flowed over (and by) the first surface of the at least one sheet, the at least one gaseous component reacts within the sorbent polymer composite material of the at least one sheet to form at least one liquid product. In some embodiments, the at least one gaseous component is flowed over (and by) both the first surface and the second surface of the at least one sheet.

In some embodiments, the at least one gaseous component includes at least one of: mercury vapor, at least one $SO_x$ compound, hydrogen sulfide, or combinations thereof. In some embodiments, the at least one liquid product includes at least one of: sulfuric acid liquid elemental sulfur, or combinations thereof. With respect to the at least one $SO_x$ compound, $SO_x$ removal can be a complex process requiring adequate $SO_x$, $O_2$, and $H_2O$ transport to create $H_2SO_4$ (sulfuric acid) by oxidation. To overcome the effect of sulfuric acid accumulation due to $SO_x$ oxidation, a sorbent polymer composite material can act as a "reverse sponge," expelling the sulfuric acid.

Certain comparative devices formed out of a sorbent polymer composite material can face significant challenges due to liquid accumulation. Performance can decline over time as the liquid forms a percolated network within the sorbent polymer composite material. Eventually, this network can become continuous with a surface of the sorbent polymer composite material and further liquid generation forces liquid to be expelled out to the surface of the sorbent polymer composite material. Owing to low solubility and diffusivity of pollutants, the liquid wetted fraction of the sorbent polymer composite material can have a lower performance than the regions which remain dry. Thus, in some embodiments, the sorbent material of the sorbent polymer composite material removes a maximum possible amount of a target pollutant.

In some embodiments, before a liquid product is formed, an internal portion of the at least one sheet takes the form of dry particles, exposed to reactants. Around individual particles, a liquid (e.g., sulfuric acid + water) film can begin to grow. In some embodiments this liquid, which may include an acid, may preferentially avoid contacting the polymer portion of the sorbent polymer composite material due to a difference in relative surface energy between the polymer material of the sorbent polymer composite material and the sorbent material of the sorbent polymer composite material.

In some embodiments, polymer material has a surface energy of less than 31 dynes per cm. In some embodiments, polymer material has a surface energy of less than 30 dynes per cm. In some embodiments, polymer material has a surface energy of less than 25 dynes per cm. In some embodiments, polymer material has a surface energy of less than 20 dynes per cm. In some embodiments, polymer material has a surface energy of less than 15 dynes per cm.

In some embodiments, polymer material has a surface energy ranging from 15 dynes per cm to 31 dynes per cm. In some embodiments, polymer material has a surface energy ranging from 20 dynes per cm to 31 dynes per cm. In some embodiments, polymer material has a surface energy ranging from 25 dynes per cm to 31 dynes per cm. In some embodiments, polymer material has a surface energy ranging from 30 dynes per cm to 31 dynes per cm.

In some embodiments, polymer material has a surface energy ranging from 15 dynes per cm to 30 dynes per cm. In some embodiments, polymer material has a surface energy ranging from 15 dynes per cm to 25 dynes per cm. In some embodiments, polymer material has a surface energy ranging from 15 dynes per cm to 20 dynes per cm.

In some embodiments, polymer material has a surface energy ranging from 20 dynes per cm to 25 dynes per cm.

The liquid from individual particles can grow continuously, and the wetted regions can combine as the liquid particles collide, leaving the polymer rich regions of the sorbent polymer composite material dry and the sorbent regions of the sorbent polymer composite material wetted. The liquid network can invade the hydrophobic polymer rich (i.e., including a relatively high quantity of the polymer material compared to the sorbent material) regions if internally generated hydraulic pressure exceeds a capillary pressure of the at least one sheet. A percolated network of the liquid product can thus be said to exist on a microscale within the sorbent polymer composite material.

In some embodiments, the at least one sheet includes a plurality of perforations. As used herein the term "perforation" means a hole made by boring the at least one sheet, by piercing the at least one sheet, by punching the at least one sheet, or by any other mechanism through which a portion of the at least one sheet is deformed, displaced, or removed.

In some embodiments, the plurality of perforations can alter the development of the internal percolated network by limiting the hydraulic pressure within the sorbent polymer composite material. In some embodiments, the formation of the internal network allows the at least one liquid product to access the second surface of the at least one sheet. In some embodiments, access to the second surface might by aided through an increase in the effective surface area of at least one surface of the at least one sheet provided in part by the presence of the plurality of perforations.

In some embodiments, the plurality of perforations can improve the overall percolation through the liquid network and limit the amount of liquid required to make a continuous percolated liquid network. In embodiments where the at least one liquid product includes an acid, over the course of liquid (e.g., acid) accumulation, the plurality of perforations can become filled with the at least one liquid product due to capillary action. This, phenomenon, may facilitate access of the at least one liquid (e.g., acid) product to the second surface of the at least one sheet, as well as provide additional surface area for the liquid (e.g., acid) to be expelled from the sorbent polymer composite material. This enhancement of the "reverse sponge" effect described herein may decrease the degree of saturation of the at least one liquid phase (which may include an acid) by relieving the hydraulic pressure associated with the liquid (e.g., acid) generation process.

The size of the plurality of perforations can be varied depending on the operating conditions of the reaction in question and based on the presence of pores within the sorbent polymer composite material itself. In some embodiments, the perforations are sized such that they are fully filled by the liquid phase and are continuous with the internal liquid network. In some embodiments, the plurality of perforations is sized larger than pores or voids within the sorbent polymer composite material.

In some embodiments, the plurality of perforations is spaced apart a sufficient distance from each other, such that there are no regions of the internal liquid network that lack nearby access to a nearby perforation. In some embodiments, larger perforations can include larger spaces between adjacent perforations, whereas smaller perforations can include smaller spaces between adjacent perforations. In some embodiments, the plurality of perforations is sufficiently large to allow external liquid (e.g., recirculated dilute $H_2SO_4$ or wash water) to access the internally generated liquid network within the sorbent polymer composite material with reduced mass transfer resistance. This can, in some embodiments, provide additional operational control in cases where an internal condition of the at least one sheet (e.g., pH) may influence the pollutant removal performance.

In some embodiments, each perforation of the plurality of perforations extends through the at least one sheet. In some embodiments, each perforation can be formed by at least one suitable operation, which may include, but is not limited to, pressing a needle through the sheet while puncturing and displacing a material of the at least one sheet. A needle punching operation may include the use of a needle-punch to remove a portion of the at least one sheet. In general, a needling operation penetrates and deforms the material, while a needle punching operation also removes a small plug of material; but both operations may be referred to as "needling."

In some embodiments, each perforation of the plurality of perforations has a diameter ranging from 0.1 mm to 6.5 mm. In some embodiments, each perforation of the plurality of perforations has a diameter ranging from 0.2 mm to 6 mm. In some embodiments, each perforation of the plurality of perforations has a diameter ranging from 0.3 mm to 5.5 mm. In some embodiments, each perforation of the plurality of perforations has a diameter ranging from 0.4 mm to 5 mm. In some embodiments, each perforation of the plurality of perforations has a diameter ranging from 0.5 mm to 4 mm. In some embodiments, each perforation of the plurality of perforations has a diameter ranging from 1 mm to 4 mm. In some embodiments, each perforation of the plurality of perforations has a diameter ranging from 2 mm to 4 mm. In some embodiments, each perforation of the plurality of perforations has a diameter ranging from 3 mm to 4 mm.

In some embodiments, each perforation of the plurality of perforations has a diameter ranging from 0.1 mm to 6 mm. In some embodiments, each perforation of the plurality of perforations has a diameter ranging from 0.1 mm to 5.5 mm. In some embodiments, each perforation of the plurality of perforations has a diameter ranging from 0.1 mm to 5 mm. In some embodiments, each perforation of the plurality of perforations has a diameter ranging from 0.1 mm to 4 mm. In some embodiments, each perforation of the plurality of perforations has a diameter ranging from 0.1 mm to 3 mm. In some embodiments, each perforation of the plurality of perforations has a diameter ranging from 0.1 mm to 2 mm. In some embodiments, each perforation of the plurality of perforations has a diameter ranging from 0.1 mm to 1 mm. In some embodiments, each perforation of the plurality of perforations has a diameter ranging from 0.1 mm to 0.5 mm. In some embodiments, each perforation of the plurality of perforations has a diameter ranging from 0.2 mm to 0.5 mm. In some embodiments, each perforation of the plurality of perforations has a diameter ranging from 0.3 mm to 0.5 mm. In some embodiments, each perforation of the plurality of perforations has a diameter ranging from 0.4 mm to 0.5 mm.

In some embodiments, each perforation of the plurality of perforations has a diameter ranging from 0.2 mm to 6.5 mm. In some embodiments, each perforation of the plurality of perforations has a diameter ranging from 0.3 mm to 6.5 mm. In some embodiments, each perforation of the plurality of perforations has a diameter ranging from 0.4 mm to 6.5 mm. In some embodiments, each perforation of the plurality of perforations has a diameter ranging from 0.5 mm to 6.5 mm. In some embodiments, each perforation of the plurality of perforations has a diameter ranging from 1 mm to 6.5 mm. In some embodiments, each perforation of the plurality of perforations has a diameter ranging from 2 mm to 6.5 mm. In some embodiments, each perforation of the plurality of perforations has a diameter ranging from 3 mm to 6.5 mm. In some embodiments, each perforation of the plurality of perforations has a diameter ranging from 4 mm to 6.5 mm. In some embodiments, each perforation of the plurality of perforations has a diameter ranging from 5 mm to 6.5 mm. In some embodiments, each perforation of the plurality of perforations has a diameter ranging from 6 mm to 6.5 mm.

As used herein, the term "perforation density" of a sheet of the device is defined as follows:

$$Perforation\ density = \frac{\left(\sum_{p=1}^{p=n} A_p\right)}{(A_s)} \times 100.$$

In the above equation, there are n perforations in the sheet, $A_1$ is the open cross-sectional area of a first perforation, $A_2$ is the open cross-sectional area of a second perforation when present (i.e., if n>1), $A_3$ is the open cross-sectional area of a third perforation when present (i.e., if n>2), and... $A_n$ is the open cross-sectional area of an nth perforation. $A_s$ is a total cross-sectional area of the sheet. The total cross-sectional area of the sheet $A_s$ is calculated without subtracting out the open cross-sectional area of each perforation. In embodiments where the device includes a plurality of sheets, the perforation density of the device is calculated by first using the above equation to determine a perforation density of each sheet and then calculating an average.

In some embodiments, the at least one sheet has a perforation density ranging from 0.14% to 50%. In some embodiments, the at least one sheet has a perforation density ranging from 0.5% to 50%. In some embodiments, the at least one sheet has a perforation density ranging from 1 % to 50%. In some embodiments, the at least one sheet has a perforation density ranging from 1.5% to 50%. In some embodiments, the at least one sheet has a perforation density ranging from 2 % to 50%. In some embodiments, the at least one sheet has a perforation density ranging from 5 % to 50%. In some embodiments, the at least one sheet has a perforation density ranging from 10 % to 50%. In some embodiments, the at least one sheet has a perforation density ranging from 20 % to 50%. In some embodiments, the at least one sheet has a perforation density ranging from 30 % to 50%. In some embodiments, the at least one sheet has a perforation density ranging from 40 % to 50%. In some embodiments, the at least one sheet has a perforation density ranging from 45 % to 50%.

In some embodiments, the at least one sheet has a perforation density ranging from 0.14% to 45%. In some embodiments, the at least one sheet has a perforation density ranging from 0.14% to 40%. In some embodiments, the at least one sheet has a perforation density ranging from 0.14% to 30%. In some embodiments, the at least one sheet has a perforation density ranging from 0.14% to 20%. In some embodiments, the at least one sheet has a perforation density ranging from 0.14% to 10%. In some embodiments, the at least one sheet has a perforation density ranging from 0.14% to 5%. In some embodiments, the at least one sheet has a perforation density ranging from 0.14% to 2%. In some embodiments, the at least one sheet has a perforation density ranging from 0.14% to 1%. In some embodiments, the at least one sheet has a perforation density ranging from 0.14% to 0.5%. In some embodiments, the at least one sheet has a perforation density ranging from 0.14% to 0.2%

In some embodiments, the at least one sheet has a perforation density ranging from 0.5% to 45%. In some embodiments, the at least one sheet has a perforation density ranging from 1% to 40%. In some embodiments, the at least one sheet has a perforation density ranging from 1.5% to 30%. In some embodiments, the at least one sheet has a perforation density ranging from 2% to 20%. In some embodiments, the at least one sheet has a perforation density ranging from 4% to 10%. In some embodiments, the at least one sheet has a perforation density ranging from 6% to 9%. In some embodiments, the at least one sheet has a perforation density ranging from 7% to 8%.

In some embodiments, the perforations are formed in a predetermined pattern. In some embodiments, the predetermined pattern is comprised of perforations spaced apart in a uniform distribution over the area of the at least one sheet. This may allow for the formation of a uniform internal liquid network within the at least one sheet. In some embodiments, the predetermined pattern is organized uniformly across the at least one sheet to ensure a uniform internal liquid network within the at least one sheet. Some suitable patterns can include square patterns, triangular closely-spaced patterns, amorphous patterns, or any other comparable pattern that generally complies with the perforation density ranges outlined herein. In some embodiments, the predetermined pattern is comprised of perforations spaced apart in a random distribution over the area of the at least one sheet. Additional perforation configurations and methods of perforating the at least one sheet described herein can be found in WIPO Publication No. WO/2019099025 to Eves et al., which is incorporated herein by reference in entirety.

In some embodiments, the at least one sheet is configured such that, when the at least one liquid product accumulates within the at least one sheet, the accumulation of the at least one liquid product causes the at least one liquid product to form an internal network that percolates at least through the plurality of perforations. As used herein, the phrase "an internal network that percolates at least through the plurality of perforations," means that the liquid network is formed through the plurality of perforations and optionally through one or more additional openings within the at least one sheet. For instance, when the sorbent polymer composite material is porous, the one or more additional openings can include one or more pores, such that the liquid network can form both through the pores of the sorbent polymer composite material and through the plurality of perforations. Moreover, in some embodiments where the polymer material includes ePTFE, the polymer material of the sorbent polymer composite material can comprise a microstructure having a plurality of fibrils and a plurality of nodes (hereinafter a "node and fibril microstructure"), such that the liquid network is formed through at least one of the plurality of fibrils or the plurality of nodes.

In some embodiments, the device includes a plurality of sheets. In some embodiments, the device comprises a plurality of sheets, which form a plurality of channels. In some embodiments, the plurality of sheets is configured such that the at least one liquid product is drainable through each channel of the plurality of channels. In some embodiments, the plurality of channels includes a plurality of adjacent channels, wherein each adjacent channel of the plurality of adjacent channels is connected.

In some embodiments, the device can be configured to provide highly efficient mercury capture with lower pressure drops than can be obtained through packed, granular beds of the sorbent material of the sorbent polymer composite material. Namely, the plurality of channels of the device can facilitate the flow of reactants, such as gaseous components, over one or more surfaces of the at least one sheet and facilitate the drainage of at least one liquid product. In some embodiments, the device includes a plurality of pleated sheets and a plurality of flat sheets in an alternating configuration.

In some embodiments, the pleated sheets may be shaped with undulations (e.g., U-shaped and/or V-shaped pleats) to maintain spacing between the flat sheets and thereby define configurations of the passageways. In some implementations, at least a portion of one of said plurality of pleated sheets and said plurality of flat sheets includes sheets having top edges angled for drainage of liquid-containing droplets formed thereupon.

In some embodiments, the device as described herein may be assembled by arranging alternating layers of pleated and flat sheets within a corresponding plurality of support frames, wherein each of the support frames may have at least two opposing ends that are at least partially open for passage of gas stream therethrough. In some implementations, a plurality of support frames may be utilized that are of a right rectangular prism configuration and/or an oblique rectangular prism configuration.

In that regard, a right rectangular prism configuration frame may be utilized to supportably contain alternating layers of pleated and flat sheets so that the layers of the flat sheets and the layers of the pleats of the pleated sheets are oriented substantially perpendicular to parallel planes defined by opposing open ends of the frame, with pleats of the pleated sheets oriented substantially parallel to a center axis of the frame that extends through the opposing open ends. Alternatively, and/or additionally, an oblique rectangular prism configuration frame may be utilized to supportably contain alternating layers of pleated and flat sheets so that the flat sheets and the pleated sheets are oriented at an angle (i.e., non-perpendicular) to parallel planes defined by opposing, open ends of the frame, with the pleats of the pleated sheets oriented substantially parallel to a center axis of the frame that extends through the opposing open ends.

In some embodiments, at least some of the plurality of frames may be provided with stacking members that extend from a top surface thereof, wherein the stacking members may function to restrain lateral movement of another frame stacked directly thereupon. In that regard, in one embodiment, a plurality of frames may be provided having substantially identical top end and bottom end shapes to facilitate stacking, wherein a plurality of stacking members is disposed about the periphery of top surfaces of the frames. In some embodiments, the device formed of a plurality of sheets can have an extruded tessellated 2D geometry, which can, for example, provide the shape of a "honeycomb."

Additional configurations of devices formed of the plurality of sheets described herein can be found in U.S. Patent No. 9,381, 459 to Stark et al., which is incorporated herein by reference in entirety.

Some embodiments of the present disclosure are directed to method including a step of flowing a gas stream (such as, but not limited to a flue gas stream) having at least one gaseous component over a first surface. In some embodiments, the method includes reacting at least one gaseous component within a sorbent polymer composite material to form at least one liquid product. In some embodiments, the method includes accumulating the at least one liquid product within the at least one sheet. In some embodiments, the method includes percolating the at least one liquid product at least through the plurality of perforations, to allow the at least one liquid product to form an internal network within the at least one sheet. In some embodiments, the method includes flowing the at least one liquid product to the second surface of the sheet. In some embodiments, the method includes draining the at least one liquid product through at least one channel of the plurality of channels. In some embodiments, the method includes collecting the at least one liquid product from the at least one channel of the plurality of channels.

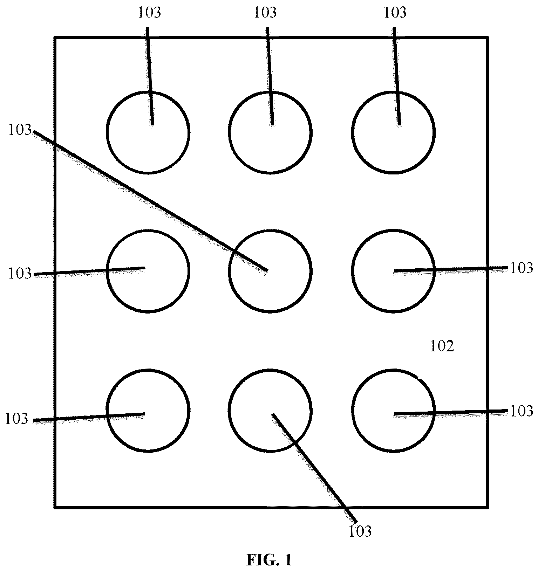

An exemplary embodiment of the present disclosure is shown in Figure 1. As shown, the exemplary device is comprised of at least one sheet of a sorbent polymer composite material 102. The at least one sheet contains a plurality of perforations 103.

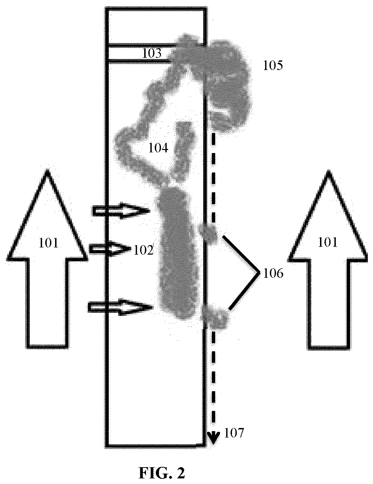

As shown in the exemplary embodiment of Figure 2, gas stream 101, which may be a flue gas stream, flows over the at least one sheet, which contains the plurality of perforations 103. Each of the plurality of perforations extends through the at least one sheet from a first surface to a second surface of the at least one sheet. The pollutants in the gas stream 101 react within the sorbent polymer composite material 102, with at least one liquid product being formed under operating conditions. The accumulation of liquid product forms an internal percolated liquid network, 104. This internal percolated network 104 grows until access to the second surface of the at least one sheet is achieved, as indicated by the liquid product shown at 105. As shown at 106, some of the liquid product can still reach the second surface of an unperforated portion of the sheet due to the "reverse sponge effect" described herein. As shown by the dashed arrow at 107, the at least one liquid product, once formed, can flow down the second surface of the at least one sheet.

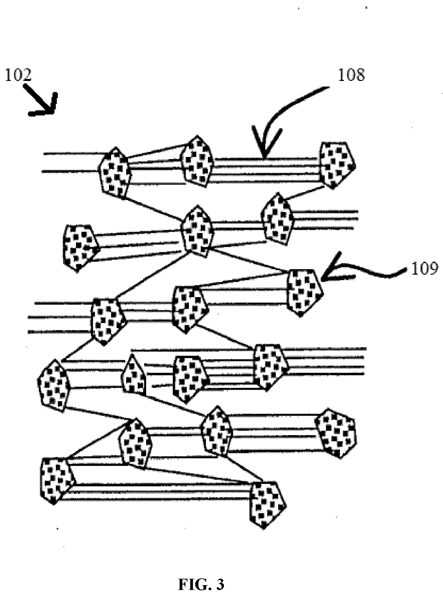

A non-limiting example of the sorbent polymer composite material 102 is shown in Figure 3. As shown, in some embodiments, a microstructure of the sorbent polymer composite material 102 may include particles of a sorbent material 109 embedded within a matrix of a polymer material 108. In some non-limiting embodiments, the particles of the sorbent material 109 are activated carbon particles. In some non-limiting embodiments, the polymer material 108 is PTFE (such as, but not limited to ePTFE) and the matrix is a node and fibril microstructure of the polymer material 108.

**EXAMPLES**

**Test Methods:** Tests for Hg and $SO_2$ removal were performed using an apparatus including: (1) a supply of air regulated by an air blower. The humidity level of the air stream was controlled by flowing through a humidification system including a gas pre-heater and a heated humidification chamber. (2) A mercury supply generated by flowing a small nitrogen purge through a vessel of liquid mercury that was placed in a temperature controlled bead bath. (3) A $SO_2$ supply from an $SO_2$ generation system. $SO_2$ was generated by mixing concentrated sulfuric acid with a solution of sodium metabisulfite that is transported by a small nitrogen purge. (4) A gas mixing zone where the gas streams the humidified air is mixed with the mercury and $SO_2$ supply streams (5) a sample cell fitted with gas sampling ports before and after the sample, and located in an oven and (6) A mercury analyzer that measures the total mercury (the gas sampling line was flown through a stannous chloride/HCl bubbler to convert any oxidized mercury to elemental mercury before the analyzer); and (7) an $SO_2$ detection analyzer.

Efficiency is reported as the difference between inlet mercury levels (bypassing the sample) and outlet levels (passing through the sample). Percent efficiency is defined as follows: % Efficiency = 100 x [Concentration (inlet) - Concentration (outlet)]/ [Concentration(inlet)].

**Example 1:** A sample sheet of a sorbent polymer composite (SPC) material was prepared using the general dry blending methodology taught in US Patent No. 7,791,861 to form a composite sample, which was then uniaxially expanded according to the teachings of U.S. Patent No. 3,953,566 to Gore. The sample sheet of the SPC material comprised 65 parts activated carbon, 20 parts PTFE and 10 parts of a halogen source in the form of tetrabutylammonium iodide (TBAI).

A rotary tool from iPS in North Carolina was used to perforate the sample SPC sheet, so as to result in the perforated SPC sample sheet (hereinafter "Sample 1") having the perforation diameter and perforation density shown in Table 1 below.

A comparative sample SPC sheet (hereinafter "Sample 2") was prepared in the same manner as Sample 1, but was not perforated.

A gas stream including Hg and $SO_2$ vapors was "flowed by" at least one surface of the sheets of Samples 1 and 2 while each of Sample 1 and 2 was oriented in a vertical configuration. Gas face velocity of the gas stream was 3.6 m/s, and $SO_2$ concentration in the gas stream was 150 volumetric parts per million. Hg vapor concentration was a nominal concentration of less than 10 $\mu g/cm^3$. Hg vapor and $SO_2$ removal efficiencies were tested and calculated as set forth in the "Test Methods" section.

A resultant exemplary effect of perforation density and perforation diameter is set forth below in Table 1.

**Table 1**

| Sample | Perforation diameter (mm) | Perforation density (%) | $SO_2$ Removal Efficiency ("$SO_2$ RE %") | Hg Removal Efficiency ("Hg RE %") |
|---|---|---|---|---|
| 1 | 1 | 5.5 | 19 | 40.9 |
| 2 (comparative) | None | None | 16.3 | 39.3 |

As indicated by the results above, the sample device with a perforation size and density within the scope of the present disclosure provides increased performance both in $SO_2$ removal and in Hg removal relative to a matched unperforated sample device.

The percentage increase in removal efficiency due to perforations in Example 1 (i.e., a comparison of Sample 1 and comparative Sample 2) was calculated as follows: % Increase = 100 x [RE%(perforated) - RE%(unperforated)]/ [RE% (unperforated)].

By the above calculation, an exemplary sample device having a perforation diameter of 1 mm and a perforation density of 5.5% provides a $SO_2$ removal efficiency that is 16.8% greater than a matched unperforated sample device. Moreover, the exemplary sample device having a perforation diameter of 1 mm and a perforation density of 5.5% provides a Hg removal efficiency that is 4.0% greater than the matched unperforated sample device.

While several embodiments of the present disclosure have been described, these embodiments are illustrative only, and not restrictive, and that many modifications may become apparent to those of ordinary skill in the art. For example, all dimensions discussed herein are provided as examples only, and are intended to be illustrative and not restrictive.

**Claims**

1. A device comprising:

    a sorbent polymer composite material comprising: a sorbent material; and a polymer material, wherein the sorbent polymer composite material is in the form of at least one sheet;
    wherein the at least one sheet comprises:

        a first surface;
        wherein the first surface is configured such that, when a gas stream having at least one gaseous component is flowed over the first surface, the at least one gaseous component reacts within the sorbent polymer composite material to form at least one liquid product;
        a second surface opposite the first surface; and
        a plurality of perforations;

            wherein each perforation of the plurality of perforations has a size ranging from 0.1 mm to 6.5 mm;
            wherein the at least one sheet has a perforation density ranging from 0.14% to 50%;
            wherein each perforation of the plurality of perforations extends through the at least one sheet;

    wherein the at least one sheet is configured such that, when the at least one liquid product accumulates within the at least one sheet, the accumulation of the at least one liquid product causes the at least one liquid product to form an internal network that percolates at least through the plurality of perforations;

    wherein the formation of the internal network allows the at least one liquid product to access the second surface of the at least one sheet.

2. The device of Claim 1, wherein each perforation of the plurality of perforations has a size ranging from 0.5 mm to 4 mm.

3. The device of Claim 1 or 2, wherein the at least one sheet has a perforation density ranging from 2% to 20%.

4. The device of any of the preceding claims comprising a plurality of sheets, wherein the plurality of sheets forms a plurality of channels, wherein the device is configured such that the at least one liquid product is drainable through each channel of the plurality of channels.

5. The device of Claim 4, wherein the plurality of channels comprises a plurality of adjacent channels, wherein each adjacent channel of the plurality of adjacent channels is connected.

6. The device of Claim 4 or 5, wherein the device comprises a plurality of pleated sheets and a plurality of flat sheets in an alternating configuration.

7. The device of any of the preceding claims, wherein the at least one gaseous component comprises at least one of: mercury vapor, at least one $SO_x$ compound, hydrogen sulfide, or combinations thereof.

8. The device of any of the preceding claims wherein the at least one liquid product comprises at least one of: sulfuric acid, liquid elemental sulfur or combinations thereof.

9. The device of any of the preceding claims, wherein the polymer material comprises at least one of: polytetrafluoroethylene (PTFE); polyfluoroethylene propylene (PFEP); polyperfluoroacrylate (PPFA); polyvinylidene fluoride (PVDF); a terpolymer of tetrafluoroethylene, hexafluoropropylene-vinylidene fluoride (THV), polychlorotrifluoroethylene (PCFE), or combinations thereof.

10. The device of any of the preceding claims, wherein the sorbent material comprises at least one of: activated carbon, silica gel, zeolite, or combinations thereof.

11. The device of any of the preceding claims, wherein the sorbent polymer composite material further comprises a halogen source.

12. A method comprising:

   obtaining a device comprising:

   a sorbent polymer composite material comprising: a sorbent material; and a polymer material, wherein the sorbent polymer composite material is in the form of at least one sheet;
   wherein the at least one sheet comprises:

   a first surface;
   a second surface opposite the first surface; and
   a plurality of perforations;

   wherein each perforation of the plurality of perforations has a size ranging from 0.1 mm to 6.5 mm;
   wherein the at least one sheet has a perforation density ranging from 0.14% to 50% based on a total surface area of the at least one sheet;
   wherein each perforation of the plurality of perforations extends through the at least one sheet;

   flowing a gas stream having at least one gaseous component over the first surface;
   reacting the at least one gaseous component within the sorbent polymer composite material to form at least one liquid product;
   accumulating the at least one liquid product within the at least one sheet;
   forming an internal network of the at least one liquid product within the at least one sheet;
   percolating the at least one liquid product at least through the plurality of perforations; and
   accessing, with the at least one liquid product, the second surface of the sheet.

13. The method of Claim 12, wherein the device comprises a plurality of sheets, wherein the plurality of sheets forms a plurality of channels, the method further comprising a step of: draining the at least one liquid product through at least one channel of the plurality of channels.

14. The method of Claim 12 or 13, further comprising a step of collecting the at least one liquid product from the at least one channel of the plurality of channels.

15. The method of any of Claims 12 to 14, wherein the gas stream is a flue gas stream.

**FIG. 1**

**FIG. 2**

FIG. 3

Europäisches
Patentamt

European
Patent Office

Office européen
des brevets

# EUROPEAN SEARCH REPORT

**Application Number**

EP 25 20 5029

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2013/063265 A2 (GORE & ASS [US]) 2 May 2013 (2013-05-02) * page 14, line 12 - page 15, line 12; figures 8,9 * * page 21, lines 4-28 * | 1-15 | INV. B01D53/02 B01D53/04 B01J20/20 B01J20/26 B01J20/28 |
| A | CN 1 772 340 A (GOAR ENTPR HOLDING INC [US]) 17 May 2006 (2006-05-17) * the whole document * | 1-15 | |
| A | US 2005/019240 A1 (LU X; WU X) 27 January 2005 (2005-01-27) * paragraphs [0005], [0014] - [0017], [0052] - [0055], [0070] - [0078]; figures 1,3,6-8 * | 1-15 | |
| X,D,P | WO 2019/099025 A1 (GORE & ASS [US]) 23 May 2019 (2019-05-23) | 1-3,7-9, 11 | |
| A,P | * paragraphs [0001], [0012], [0014], [0032] - [0034]; figure 1 * | 4-6,10, 12-15 | |
| A | US 2012/247330 A1 (CHANG RAMSAY [US] ET AL) 4 October 2012 (2012-10-04) * paragraphs [0011], [0012], [0027], [0033], [0041]; figures 4,5 * | 1-15 | TECHNICAL FIELDS SEARCHED (IPC) B01D G01N B01J |

The present search report has been drawn up for all claims

| Place of search | Date of completion of the search | Examiner |
|---|---|---|
| The Hague | 4 November 2025 | Howe, Patrick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 5029

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2025

| Patent document cited in search report | | Publication date | Patent family member(s) | | Publication date |
|---|---|---|---|---|---|
| WO 2013063265 | A2 | 02-05-2013 | AU | 2012328720 A1 | 22-05-2014 |
| | | | CA | 2853697 A1 | 02-05-2013 |
| | | | CN | 104136093 A | 05-11-2014 |
| | | | EP | 2780097 A2 | 24-09-2014 |
| | | | ES | 2730198 T3 | 08-11-2019 |
| | | | JP | 5977359 B2 | 24-08-2016 |
| | | | JP | 2014534063 A | 18-12-2014 |
| | | | KR | 20140088881 A | 11-07-2014 |
| | | | TR | 201908825 T4 | 22-07-2019 |
| | | | US | 2013104736 A1 | 02-05-2013 |
| | | | WO | 2013063265 A2 | 02-05-2013 |
| CN 1772340 | A | 17-05-2006 | NONE | | |
| US 2005019240 | A1 | 27-01-2005 | US | 2005019240 A1 | 27-01-2005 |
| | | | US | 2007207923 A1 | 06-09-2007 |
| WO 2019099025 | A1 | 23-05-2019 | CN | 111372673 A | 03-07-2020 |
| | | | CN | 115970507 A | 18-04-2023 |
| | | | EP | 3710144 A1 | 23-09-2020 |
| | | | JP | 7095088 B2 | 04-07-2022 |
| | | | JP | 7382455 B2 | 16-11-2023 |
| | | | JP | 2021512776 A | 20-05-2021 |
| | | | JP | 2022130511 A | 06-09-2022 |
| | | | KR | 20200077595 A | 30-06-2020 |
| | | | KR | 20220046699 A | 14-04-2022 |
| | | | KR | 20230112751 A | 27-07-2023 |
| | | | KR | 20250068793 A | 16-05-2025 |
| | | | SG | 11202004458V A | 29-06-2020 |
| | | | US | 2020263589 A1 | 20-08-2020 |
| | | | US | 2021332732 A1 | 28-10-2021 |
| | | | WO | 2019099025 A1 | 23-05-2019 |
| US 2012247330 | A1 | 04-10-2012 | US | 2012247330 A1 | 04-10-2012 |
| | | | US | 2013255488 A1 | 03-10-2013 |
| | | | US | 2015059572 A1 | 05-03-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9827551 B, Hardwick
- US 7442352 B, Lu
- WO 2019099025 A, Eves
- US 9381459 A, Stark
- US 7791861 B
- US 3953566 A, Gore